# EUROPEAN PATENT APPLICATION

(11) **EP 1 209 815 A1**
(43) Date of publication of application: **29.05.2002**
(21) Application number: 00125437.4
(22) Date of filing: 20.11.2000
(51) Int. Cl.: H04B 1/38

(54) **Hand-held terminal for a wireless telecommunication system**

(71) Applicant: Sony International (Europe) GmbH, 10785 Berlin (DE)
(72) Inventor: Winkler, Gregor, Sony International (Europe) GmbH, 85609 Aschheim (DE)
(74) Representative: Körber, Martin, Dipl.-Phys.

(57) **Abstract**

A hand-held terminal for a wireless telecommunication system comprises antenna means (12) internal to said terminal, an output stage (10) for providing signals to said antenna means (129 to be transmitted therefrom, measuring means (16) for measuring reflection of said signals from said antenna means (12), and warning means (18, 20) for warning a user of said terminal when said signal reflection measured by said measuring means (16) exceeds a predetermined threshold. In this way, a wrong hand position of a user unintentionally covering the antenna means (12) with his hand can be detected through detection of an impedance mismatch.

## Description

The present invention relates to a hand-held terminal for a wireless telecommunication system.

Internal antennas of hand-held terminals (e.g. mobile phones) for a wireless telecommunication system (e.g. GSM or UMTS system) are often sensitive to being covered by a hand of a user of the terminal. Covering the antenna (more precisely, covering the portion of the terminal where the internal antenna is situated) can reduce the performance of the antenna and can lead to an interruption of a communication established with another terminal of the telecommunication system. In many designs of hand-held terminals the antenna is invisibly integrated into the terminal so that the user is not able to recognize the antenna's position within the terminal from the outside. The average user, unaware of the problems involved with covering the antenna, will not pay attention if he or she places his or her hand over the antenna region of the terminal or not. Additionally, modern hand-held terminals are getting smaller and smaller, so the user is even more tempted to place his hand or fingers over the antenna.

Many manufacturers try to prevent the user from unintentionally covering the antenna by designing the case of the terminal with finger stoppers or by mentioning the coverage problem in the terminal's user manual. However, the first solution puts undesired constraints on the design of the terminal, and a pleasant design is getting more and more an important reason for buying a terminal of a particular manufacturer. The second solution requires the user to thoroughly study the manual which will not often be the case.

It is therefore an object of the present invention to provide a more effective way of preventing unintentional coverage of an internal antenna of a hand-held terminal by a user thereof.

To achieve this object, the present invention provides a hand-held terminal for a wireless telecommunication system, comprising antenna means internal to the terminal, and an output stage for providing signals to the antenna means to be transmitted therefrom, characterized by measuring means for measuring the reflection of the signals from the antenna means, and warning means for warning a user of the terminal when the signal reflection measured by the measuring means exceeds a predetermined threshold.

The solution according to the present invention is based on the idea that by placing ones hand over the internal antenna means the antenna's impedance changes and a resulting impedance mismatch increases signal reflection at the antenna means. Therefore, the amount of reflection indicates whether the antenna means are covered by the user's hand or not. Usually, the antenna means will be designed so as to achieve optimum impedance matching in a particular normal position of the terminal (e.g. at the user's head) and the user's hand. In this normal position, the reflection of transmitted RF power at the antenna means has a minimum value. When the hand or the fingers slip over the antenna means, this can be detected by measuring the reflected signals. Once the signal reflection exceeds the predetermined threshold, the user is given a warning and he or she can correct the hand or finger position on the terminal.

Such an internal antenna can be a helix antenna, a meander structure antenna or a patch antenna. Since a patch antenna, when built in a small housing, is very sensitive regarding a coverage by users hand, the invention is preferably used with a patch antenna. Therefore according to preferred embodiment of the present invention, the antenna means may comprise a patch antenna.

In some wireless digital telecommunication systems the power level of a terminal can be selected by the network depending on the quality of the connection between terminal and base station. To avoid not necessary increasing of the terminal's power level caused by covering the antenna by users hand, the threshold may be determined depending on the power level at which said output stage is operating.

Furthermore, a directional coupler may be connected between the output stage and the antenna means for providing reflected signals to the measuring means. Such a directional coupler can advantageously be used additionally for the power detection of an automatic power control system, which is also part of the terminal.

The warning means may advantageously be arranged to output an acoustic warning signal when the signal reflection exceeds the threshold.

The warning means may also be arranged to output visual warning information for the user on a display of the terminal.

Preferably, the warning means are arranged to warn the user only during use of the terminal for a phone conversation or for data transmission.

Further, the warning means may be arranged to refrain from warning the user when an external antenna is connected to an antenna connector of the terminal.

Further advantageously, the output of a warning signal to a user by the warning means according to the present invention is enabled or disabled depending on a corresponding user input. In this case, the mobile terminal advantageously comprises a man machine interface for inputting an enabling/disabling information to the warning means. The man machine interface can be the normal key pad of the mobile terminal or a special action key or any other suitable input means allowing a user to input an enabling/disabling information.

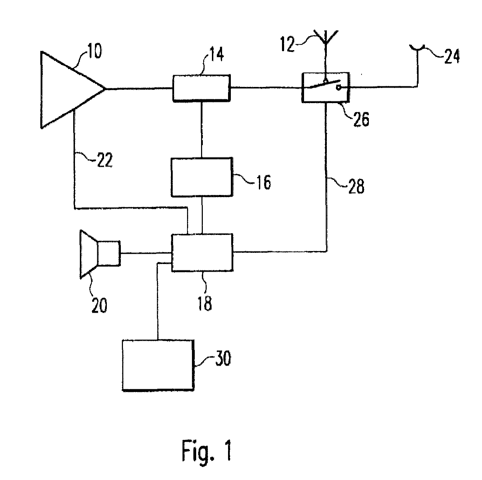

In the following, the present invention will be explained in more detail with reference to the accompanying single figure 1 in which a block diagram of a preferred embodiment of the hand-held terminal according to the present invention is schematically shown. The terminal is preferably a mobile phone for wireless use e.g. in a GSM or UMTS telecommunication system. In the block diagram, a power output amplifier 10 forming an output stage of the terminal outputs RF signals to be transmitted from the terminal. For transmitting these RF signals, the terminal comprises an antenna 12 which is integrated into the terminal and cannot be recognized by a user from the outside. Preferably, the antenna 12 is a patch antenna. The antenna 12 is designed to achieve optimum impedance matching and thus minimum signal reflection when the terminal is held at the user's head and the antenna 12 is free from coverage by the fingers or the palm of the hand holding the terminal.

Once the user moves his hand over the antenna 12, reflection of the RF signals supplied to the antenna 12 increases. To detect the reflected signals, a directional coupler 14 is provided between the amplifier 10 and the antenna 12. A measuring circuit 16 measures the reflected signals and provides a corresponding measurement result to an electronic warning control unit 18 which is preferably formed of a microprocessor. The measurement result is indicative of the amount of signal reflection at the antenna 12. To this end, the measuring circuit 16 can measure the reflected power or the amplitude of the reflected signals, for example. The warning control unit 18, optionally after analog-to-digital conversion of the received measurement result, compares the measurement result with a predetermined warning threshold which is stored in the warning control unit 18. If the measurement result exceeds the warning threshold, i.e. if the amount of signal reflection is above an acceptable level, the warning control unit 18 effects a warning signal to be output from a suitable warning member 20. In the embodiment shown, the warning member 20 is a speaker and the warning signal is given as an acoustic signal. Preferably, the acoustic signal is given only shortly (e.g. in form of a single short beep) so as not to disturb a phone conversation made with the terminal. It is to be understood that additionally or alternatively the warning signal may be given in a tactile form, e.g. as a vibration signal and even in an optical form.

The amplifier 10 may be able to operate at different power levels. Then, depending on the operating power level of the amplifier 10 the power of the reflected signals will vary. The measurement result is therefore dependent on the amplifier's power level, too. For this reason, the warning threshold is set in dependence of the amplifier's power level (as indicated by a line 22) and is higher at a higher power level of the amplifier 10 and lower at a lower power level. In this way, the trigger level when the terminal is issues a warning signal is power level dependent.

The terminal may have an antenna connector 24 accessible from the outside for connecting an external antenna (not shown) to the terminal. The external antenna may be, e.g., a car-mounted antenna. An antenna switch 26 enables to switch between the built-in antenna 12 and the external antenna. The antenna switch 26 switches automatically in response to inserting and removing the external antenna into and from the connector 24. The switching state of the antenna switch 26 is provided to the warning control unit 18 (as indicated by a line 28). In case the external antenna is connected to the terminal and is used for signal transmission, issue of the warning signal is suppressed even if the degree of detected reflection exceeds a level which is considered unacceptable for a situation in which the internal antenna 12 is used.

Furthermore, in case of a warning detailed information on the warning may be indicated on a LCD display 30 of the terminal. Such information can include the reason for the warning, an explanation of the background and how to properly hold the terminal in order to resolve the mismatching, for example. The user may be able to clear the display 30 by an acknowledgement, e.g. by pressing a particular button on the terminal.

The warning signal is preferably issued only during a phone conversation. The warning control unit 18 is programmed so as to not issue the warning during other phases of operation of the terminal such as location updating, signalling and the like.

The output of a warning signal can be enabled or disabled depending on a corresponding user input. Thus, the user can determine if he or she wishes to receive a warning signal or not. The in put of the corresponding enabling/disabling information by a user can e. g. be performed through the usually provided key pad of the mobile terminal. Alternatively, a special input means can be provided allowing the user to input a corresponding enabling/disabling information to enable or disable the output of a warning signal.

## Claims

1. Hand-held terminal for a wireless telecommunication system, comprising
- antenna means (12) internal to said terminal, and
- an output stage (10) for providing signals to said antenna means (129 to be transmitted therefrom,
**characterized by**
- measuring means (16) for measuring reflection of said signals from said antenna means (12), and
- warning means (18, 20) for warning a user of said terminal when said signal reflection measured by said measuring means (16) exceeds a predetermined threshold.

2. Terminal according to claim 1,
**characterized in**
**that** said antenna means (12) comprise a patch antenna.

3. Terminal according to claim 1 or 2,
**characterized in**
**that** said threshold is determined dependent on a power level at which said output stage (10) is operating.

4. Terminal according to anyone of claims 1 to 3,
further **characterized by**
a directional coupler (14) connected between said output stage (10) and said antenna means (12) for providing reflected signals to said measuring means (16).

5. Terminal according to anyone of claims 1 to 4,
**characterized in**
**that** said warning means (18, 20) are arranged to output an acoustic warning signal.

6. Terminal according to anyone of claims 1 to 5,
**characterized in**
**that** said warning means (18, 20) are arranged to output a visual warning signal (30) of said terminal.

7. Terminal according to anyone of claims 1 to 6,
**characterized in**
**that** said warning means (18, 20) are arranged to warn said user only during use of said terminal for a phone conversation or for data transmission.

8. Terminal according to anyone of claims 1 to 7,
**characterized in**
**that** said warning means (18, 20) are arranged to refrain from warning said user when an external antenna is connected to an antenna connector (24) of said terminal.

9. Terminal according to anyone of claims 1 to 8,
**characterized in**
**that** the output of a warning signal to a user by said warning means (18, 20) is enabled or disabled depending on a corresponding user input.

10. Terminal according to claim 9,
**characterized in**
by a man machine interface for inputting an enabling/disabling information to said warning means (18, 20).
